(19)

**Europäisches Patentamt**
**European Patent Office**
**Office européen des brevets**

(11) **EP 4 645 707 A1**

(12) **EUROPEAN PATENT APPLICATION**

(43) Date of publication:
**05.11.2025 Bulletin 2025/45**

(21) Application number: **25173227.7**

(22) Date of filing: **29.04.2025**

(51) International Patent Classification (IPC):
**H04B 1/04** *(2006.01)* **H04B 17/10** *(2015.01)*

(52) Cooperative Patent Classification (CPC):
**H04B 1/0458; H04B 1/0475; H04B 17/103**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.04.2024 US 202418651389**

(71) Applicant: **Microsoft Technology Licensing, LLC Redmond, WA 98052-6399 (US)**

(72) Inventors:
• **HARPER, Marc**
  **Redmond, 98052-6399 (US)**
• **KHAWAND, Charbel**
  **Redmond, 98052-6399 (US)**

(74) Representative: **Page White Farrer**
**Bedford House**
**21a John Street**
**London WC1N 2BF (GB)**

(54) **ADJUSTING A TRANSMISSION SIGNAL**

(57) A communication device outputs a probe signal from a power amplifier to the antenna and measures reflected impedance from the antenna resulting from the probe signal. The communication device classifies the reflected impedance measured from the antenna resulting from the probe signal as a select classification of multiple calibrated reflection classifications, wherein the multiple calibrated reflection classifications include variations in reflected impedance. The communication device adjusts the transmission signal in accordance with the select classification.

FIG. 1

## Description

## Background

A power amplifier can supply a transmission signal to an amplifier for transmission into a medium. A mismatch between the impedance of the antenna and the power amplifier can impair antenna performance.

## Summary

In some aspects, the techniques described herein relate to a method of adjusting a transmission signal supplied to an antenna, the method including: outputting a probe signal from a power amplifier to the antenna; measuring reflected impedance from the antenna resulting from the probe signal, classifying the reflected impedance measured from the antenna resulting from the probe signal as a select classification of multiple calibrated reflection classifications, wherein the multiple calibrated reflection classifications include variations in reflected impedance; and adjusting the transmission signal in accordance with the select classification.

In some aspects, the techniques described herein relate to a communications device for adjusting a transmission signal, the communications device including: one or more hardware processors; an antenna; a power amplifier connected to the antenna and configured to output a probe signal and the transmission signal to the antenna; a reflection analyzer circuitry connected to the antenna and configured to measure reflected impedance from the antenna resulting from the probe signal; and a classifier executable by the one or more hardware processors and configured to classify the reflected impedance measured from the antenna resulting from the probe signal as a select classification of a multiple calibrated reflection classifications, wherein the multiple calibrated reflection classifications include variations in reflected impedance, at least one matched classification, and at least one mismatched classification, wherein the power amplifier is further configured to adjust the transmission signal in accordance with the select classification.

In some aspects, the techniques described herein relate to one or more tangible processor-readable storage media embodied with instructions for executing on one or more processors and circuits of a communication device a process for adjusting a transmission signal supplied to an antenna the process including: outputting a probe signal from a power amplifier to the antenna; measuring reflected impedance from the antenna resulting from the probe signal, classifying the reflected impedance measured from the antenna resulting from the probe signal as a select classification of a multiple calibrated reflection classifications, wherein the multiple calibrated reflection classifications include variations in reflected impedance and at least one mismatched classification; and adjusting the transmission signal in accordance with the select classification.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

## Brief Description of the Drawings

FIG. 1 illustrates an example communication device for adjusting a transmission signal supplied to an antenna based on reflected impedance.

FIG. 2 illustrates example components of an electronic device for classifying the reflected impedance based on a probe signal.

FIG. 3 illustrates example components of an electronic device for adjusting a transmission signal according to a classification of the reflected impedance from a probe signal.

FIG. 4 illustrates an example Smith chart demonstrating a relationship of a load impedance $(Z_L)$ relative to a source impedance $(Z_0)$ as a function of frequency.

FIG. 5 illustrates example operations for adjusting a transmission signal according to a classification of the reflected impedance from a probe signal.

FIG. 6 illustrates an example communication device for use in implementing the described technology.

## Detailed Descriptions

In a communication system, the described technology adjusts a transmission signal supplied by a power amplifier to an antenna based on a classification of reflected impedance measured in response to a probe signal sent from the power amplifier to the antenna. Impedance mismatches between the power amplifier and the antenna impair the performance of the communication system, thereby increasing the power demand to achieve acceptable transmission power from the antenna. A technical benefit of the described technology is that power of the adjusted transmission signal is supplied more efficiently by the power amplifier to the antenna, thereby reducing the charge drain on a rechargeable power source (e.g., a battery) or the power pulled from another power source (e.g., the electrical grid).

Generally, the described technology measures the reflected impedance from a probe signal supplied by a power adapter to an antenna across a conductor. The measured reflection impedance is evaluated against calibrated reflection classification data to classify the reflected impedance (e.g., a matched impedance classification, one or more mismatched impedance classifications). Each classification corresponds with a corresponding corrective action to be applied to ensuing transmission signals. Example corrective actions may include, without limitation, such as adjusting the transmission power of the transmission signal, adjusting filtering applied to the transmission signal, adjusting impedance matching between the power amplifier and the antenna, and adjusting an electrical aperture of the antenna. Applying the appropriate corrective action to the transmission signal can reduce the negative effects of the impedance mismatch and/or improve the power utilization efficiency of the power amplifier.

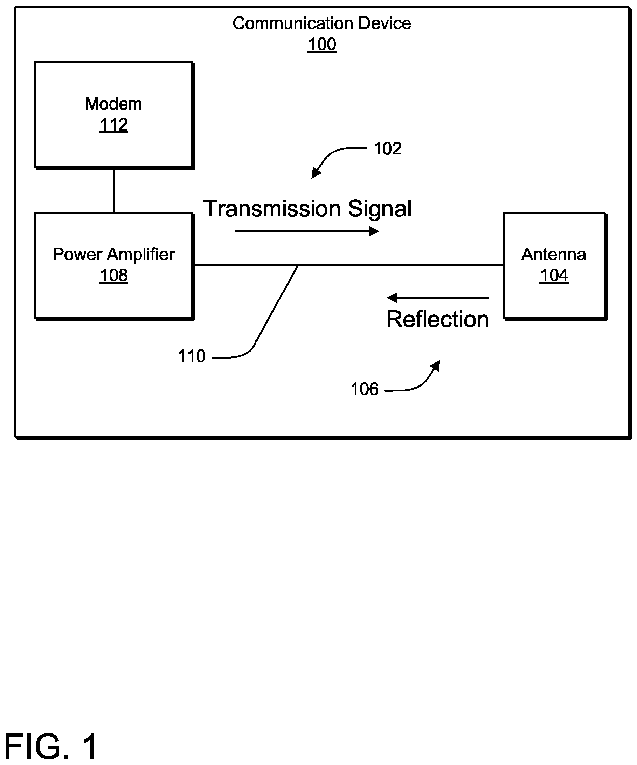

FIG. 1 illustrates an example communication device 100 for adjusting a transmission signal 102 supplied to an antenna 104 based on reflected impedance 106. In some implementations, a power amplifier 108 and the antenna 104 are connected by a conductor 110 and calibrated, with the assistance of a calibration controller, for a variety of impedance matching conditions between the power amplifier 108 and the antenna 104. Such conditions correspond to reflected impedance classifications determined by the system and their associated corrective actions. Some of the calibrations are determined by testing reflected impedance at the output of the conductor with a predefined load (e.g., 50 Ohms with little or no reactance and no antenna) across different frequencies in a wide frequency range. For this testing condition, there should be little or no reflection. Such calibrations correspond to matched impedance conditions or "conducted states." Other calibrations are obtained by testing reflected impedance at the output of the conductor with a connected antenna across different frequencies in a wide frequency range. Such calibrations correspond to mismatched impedance conditions or "non-conducted states." Furthermore, many communication devices include multiple antennas, so the calibrations may be for specific antennas or combined (e.g., averaged) across multiple antennas. Accordingly, each antenna may have its own impedance matching calibrations recorded in the classification datastore. Likewise, calibrations may vary across multiple devices. As such, so the calibrations may be for specific devices or combined (e.g., averaged) across multiple devices (e.g., multiple devices within a single SKU or with similar communication subsystems).

Given the data points resulting from the reflected impedance testing for various factors, such as for each frequency band, each antenna, and each operating condition (e.g., at a 50 Ohm load or in different antenna operating conditions, such as with a coupling object near the antenna), the data points within each frequency band of interest are combined (e.g., with best-fit curves) to define classification regions for each frequency band, each antenna, each device, and/or each operating condition. These regions are also referred to as reflected impedance regions), for example, and define a region of a Smith chart corresponding to each of the reflected impedance classifications that are used in a classification operation. Typically, the regions are enlarged to expand beyond the frequency bands of interest and the traces themselves, introducing a type of tolerance or buffer to provide a larger region for classification.

These impedance matching calibrations, including the factors and the impedance curves, can be stored in a classification datastore (not shown) accessible by a reflection analyzer, a classifier, and a transmission controller. The impedance matching calibrations are typically defined during manufacturing and/or testing of the communication device 100 and stored in the classification datastore.

Generally, a modem 112 is at least partially a hardware component that modulates signals for communications. For example, the modem 112 can convert a signal between digital and analog formats. During transmission, a digital transmission signal is converted to an analog transmission signal, passing through the power amplifier 108 and along the conductor 110 to the antenna 104, which radiates the transmission signal 102 as a radiofrequency signal. During reception, a radiofrequency signal is received by the antenna 104, passing along the conductor 110 as an analog receive signal to the power amplifier 108 to the modem 112, which converts the analog receive signal to a digital receive signal that can be processed by the communication device 100.

Impedance generally represents an opposition by a system to the flow of energy from a source, such as from the power amplifier 108. For signals that vary with time (e.g., a radiofrequency communication signal), impedance usually changes with the frequency of the signal. In general, impedance (Z) includes a real component (R=resistance) and a complex/imaginary component (X=reactance), such that $Z=R+X$. Ideally, the impedance of the power amplifier 108 is matched to the impedance of the antenna 104, such that the reactance component equals zero. Such impedance matching maximizes power transfer from the power amplifier 108 to the antenna 104. However, perfect matching is virtually unattainable. Nevertheless, transmission system design typically attempts to minimize impedance mismatches (e.g., minimizing the reactance component of the impedance) between the power amplifier 108 and the antenna 104. Transmission line effects in the conductor 110 can also contribute to an impedance mismatch. An impedance mismatch between a power amplifier 108 and an antenna 104 results in some of the power supplied by the power amplifier 108 being reflected back from the antenna 104, reducing the net power transfer between the two communication components.

One method of measuring reflected impedance includes comparing the power supplied to the antenna 104 by the power amplifier 108 to the power reflected from the antenna 104 to the power amplifier 108, referred to as "return loss." Return loss, for example, is denoted as:

$$RL(dB) = 10 \log_{10} \frac{P_i}{P_r}$$

where *RL(dB)* denotes the return loss in dB, $P_i$ denotes the power of the incident/transmission signal supplied by the power amplifier 108 to the antenna 104, and $P_r$ denotes the power reflected from the antenna 104 back to the power amplifier 108.

Other methods of measuring reflected impedance may include, without limitation, a reflection coefficient ($\Gamma$) and a voltage standing wave ratio (VSWR). Note: the reflection coefficient corresponds to the S-parameter of a Smith chart. Such measurements can be converted amongst themselves. For example, the reflection coefficient denotes the reflection coefficient is the ratio of the complex amplitude of the reflected signal (designated by the subscript r) to the complex amplitude of the incident/transmission signal (designated by a subscript i), whether by current or voltage:

$$\Gamma = \frac{V_r}{V_i} = \frac{I_r}{I_i}$$

The return loss can be determined from the reflection coefficient according to the following:

$$RL(dB) = -20 \log|\Gamma|$$

Likewise, the voltage standing wave ratio can be determined according to the following:

$$VSWR = \frac{|V_i| + |V_r|}{|V_i| - |V_r|} = \frac{1 + |\Gamma|}{1 - |\Gamma|}$$

The return loss also can be determined from the VSWR according to the following:

$$RL(dB) = 20 \log \frac{VSWR + 1}{VSWR - 1}$$

Based on the reflected impedance measured responsive to the probe signal, a transmission controller in the modem 112 can perform a corrective action corresponding to the classification determined for the combination of the power amplifier 108 and the antenna 104. Example corrective actions may include, without limitation, adjusting the transmission signal characteristics of the transmission signal to reduce the impedance mismatch by modifying the filtering of the transmission signal provided to the antenna 104, reducing power consumption by the power amplifier 108 for the transmission signal, increasing the power of the transmission signal from the antenna 104, adjusting impedance matching between the power amplifier 108 and the antenna 104, and/or adjusting aperture tuning at the antenna 104.

Different types of corrective actions may present different types of technical benefits. For example, decreasing the power of the transmission signal supplied by the power amplifier can reduce power consumptions, preserve battery life, and/or better satisfy SAR (Specific Absorption Rate) requirements in some circumstances, and increasing the power of the transmission signal supplied by the power amplifier can increase range and/or fidelity of the transmission signal radiated from the antenna. In another example, adjusting the filtering applied to the transmission signal supplied by the power amplifier can remove imperfections in the signal that have been introduced by the power amplifier. In yet another example, adjusting an impedance matching network can reduce reflected impedance and improve power throughput to the antenna and adjusting aperture tuning can improve the efficiency of the antenna's transmission operation.

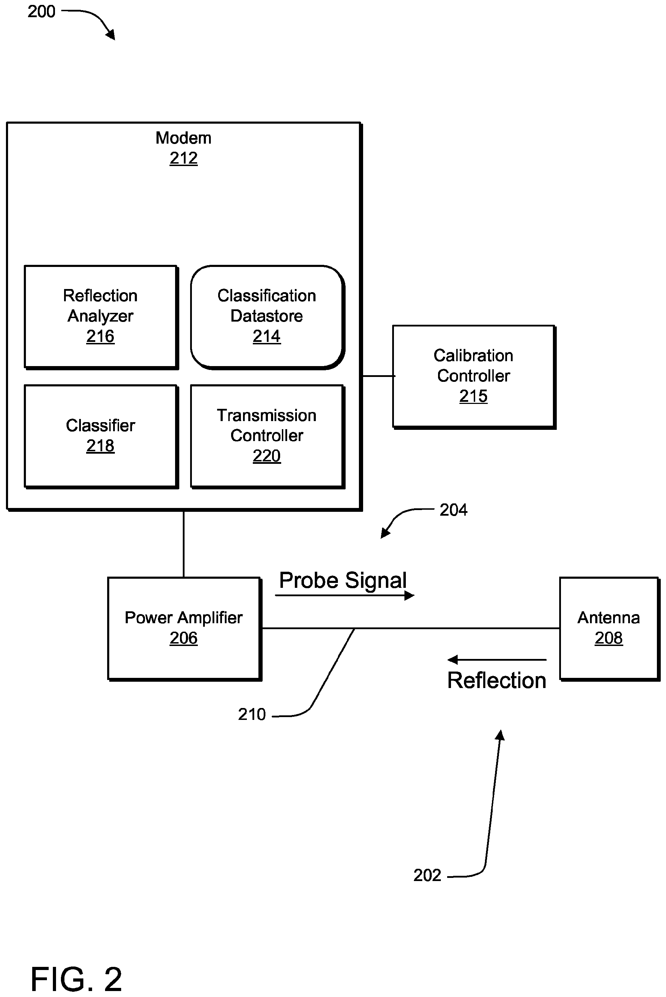

FIG. 2 illustrates example components 200 of an electronic device for classifying the reflected impedance 202 based on a probe signal 204. In various implementations, examples of the probe signal 204 may include a specially-designed signal used to measure the reflected impedance 202, a routine transmission signal relating to a communication, or some other signal communicated between a power amplifier 206 and an antenna 208, which are connected by a conductor 210. For example, the probe signal 204 may include one or more signals set to radiate from the antenna 208 below a defined noise level. In some implementations, the defined noise level indicates the power density of that signal being below what is considered the "noise floor" of the technology that the antenna is carrying. As an example, one could specify the probe signal to be between -41dbm/MHz and -61dbm/MHz so as to be below the noise floor. In this manner, the probe signal 204 would not interfere with other communications from the antenna 208. Alternatively, the probe signal 204 may include one or more routine transmission signals of the communication session, such that subsequent transmission signals can be adjusted based on the classification of the reflected impedance 202 measured in response to the probe signal 204. Yet another probe signal 204 may be any signal communicated between the power amplifier 206 and the antenna 208, such as when the communication session is inactive. In some implementations, the frequency of the probe signal and its bandwidth is programmable, and the frequency of applying the probe signals is selectable based on the needs of the connected state operation. The probe signal does not need to run, for instance, if the wireless network signal (e.g., the transmission signal of the current or a previous communication session) already provided the state of the connection.

The power amplifier 206 is connected to a modem 212, which controls the communications operations through the power amplifier 206 and the antenna 208. In the illustrated implementation, the modem 212 also includes components and data for adjusting the transmission signals responsive to the classification of the reflected impedance 202, although other implementations may separate these functions from the modem.

In various embodiments, the modem 212 may include a classification datastore 214 that includes a matrix of reflected impedances with corresponding corrective actions. A calibration controller 215 can assist with the calibration (e.g., calculating the best-fit curves, triggering variable probe signals via a transmission controller 2XX and the power amplifier 206, recording the impedance matching calibrations into the classification datastore 214, etc.).

The classification datastore 214 can also include per-frequency channel records, as the classifications and the corresponding corrective actions can vary with frequency. Other factors may also be included in the matrix, including a selection of antennas and a selection of devices. In one implementation, the classification datastore 214 records the classifications according to a region of S-parameters (e.g., as in a Smith Chart, a mathematical transformation of the two-dimensional Cartesian complex plane). By mapping the S-parameter of the measured reflected impedance to one or more of the regions in the classifications (potentially including the per frequency channel aspects of the classifications), the measured reflected impedance is identified as corresponding to at least one classification, and the corrective action corresponding to the at least one classification can be applied to improve power, filtering, matching, tuning operations of the system.

In summary, the impedance matching calibrations in the classification datastore 214 may include various combinations of some or all of the following factors:

- Selected Smith Chart regions
- Selected Frequencies
- Selected Antennas
- Specific Absorption Rate (SAR) thresholds
- Corrective Actions and associated parameters (e.g., power adjustments, tuning parameters, ignoring SAR back-offs)

The modem 212 also includes a reflection analyzer 216 that measures reflected impedance from the antenna resulting from the probe signal. In some implementations, the probe signal is a routine transmission signal of a communication session. In other implementations, the probe signal includes one or more specially designed signals at different frequencies to test the reflected impedance at the different frequencies. In some implementations, the specially designed signals may be transmitted with a power that is below a defined noise level of the power amplifier and the antenna (e.g., below the noise floor) so as not to interfere with communications sessions.

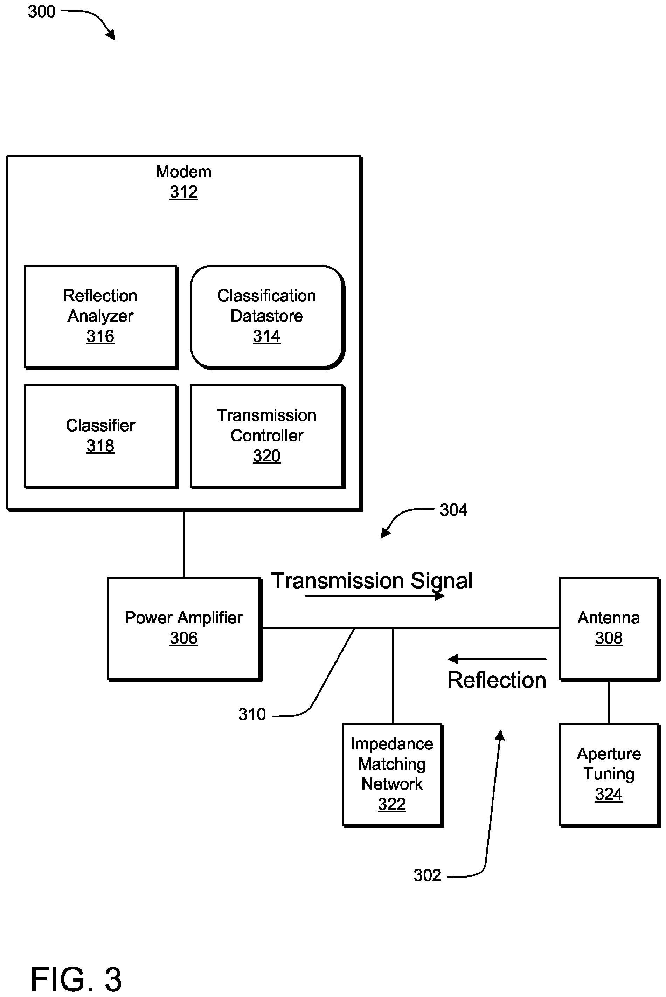

The modem 212 also includes a classifier 218 that receives the measured reflected impedance responsive to the probe signal and maps that to one or more select impedance matching calibrations in the classification datastore 214. For example, the impedance matching calibrations include best-fit curves that can be used to define classification regions of a Smith chart, and the classifier 218 determines the region(s) where the measured reflected impedance resides. By classifying the measured reflected impedance to the determined region(s), the classifier 218 identifies the corresponding corrective action(s) associated with that region. A transmission controller 220 applies the corrective actions to the power amplifier 206 when transmitting one or more subsequent transmission signals via the antenna 208 in an effort to reduce unnecessary power consumption, increase signal strength, refine the transmission signals for improved transmission performance, etc. More discussion of the corrective actions is provided with respect to FIG. 3.

It should be understood that the various components illustrated within the modem 212 may be located outside the modem 212 in some implementations. Likewise, the calibration controller 215 may be integrated into the modem 212.

FIG. 3 illustrates example components 300 of an electronic device for adjusting a transmission signal 304 according to a classification of the reflected impedance 302 from a probe signal. The electronic device includes a power amplifier 306 connected to an antenna 308 via a conductor 310. The electronic device also includes a modem 312 that is illustrated as including a classification datastore 314, a reflection analyzer 316, a classifier 318, and a transmission controller 320, although these components may be located outside the modem 312 in some implementations. These components operate as described with respect to FIG. 2 above and as further described herein.

As described with respect to FIG. 2, the modem 312 includes the classifier 318 that receives the measured reflected impedance responsive to the probe signal and maps that to one or more select impedance matching calibrations in the classification datastore 314. For example, the impedance matching calibrations include best-fit curves anchoring classification regions of a Smith chart, and the classifier 318 determines the region(s) where the measured reflected impedance resides. By classifying the measured reflected impedance to the determined region(s), the classifier 318 identifies the corresponding corrective action(s) associated with that region.

In some implementations, multiple reflected impedance measurements are taken from active transmission signals during a communication session, where the probe signals include one or more of these transmission signals. In other implementations, the probe signals are separate from the transmission signals of a communication session, such as a below-noise-floor signal discussed above.

Based on the classification, the transmission controller 320 applies the corresponding corrective action(s) to the power amplifier 306, a dynamic impedance matching network 322 (e.g., with variable capacitance and/or inductance), an aperture tuning component 324 (e.g., a switching network capable of adjusting the electrical length and therefore the resonant frequency of the antenna 308) and/or other transmission refining components when transmitting one or more subsequent transmission signals via the antenna 308 in an effort to reduce unnecessary power consumption, increase signal strength, refine the transmission signals for improved transmission performance, etc. Factors corresponding to the classified reflected impedance conditions may be applied to subsequent transmissions (e.g., an amount of power adjustment applied to the transmission signal 304 by the power amplifier 306, the impedance matching setting of the dynamic impedance matching network 322, a switch setting in the aperture tuning component 324).

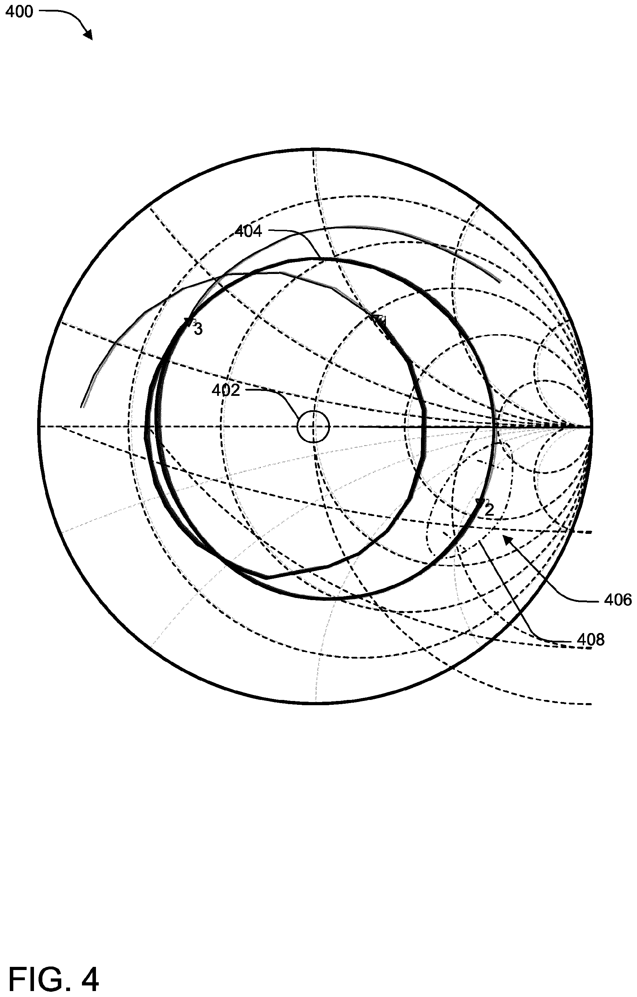

FIG. 4 illustrates an example Smith chart 400 demonstrating a relationship of a load impedance ($Z_L$) relative to a source impedance ($Z_0$) as a function of frequency. In this manner, the dark circle 402 depicts a purely resistive impedance normalized to 50 Ohms, corresponding to a matched classification (e.g., a conducted state in which the impedance is measured with a non-reactive 50 Ohm plug). The region of the Smith chart corresponding to the dark circle 402 represents a region of little or no power reflection.

The dark trace 404 of the Smith chart 400 depicts the complex reflected impedance between a power amplifier and an antenna over a range of frequencies. Three locations are marked on the dark trace 404 ($\nabla_1$, $\nabla_2$, and $\nabla_3$), denoting reflected impedance measurements at three different center frequencies (e.g., designating low band, mid band, high band frequencies). Accordingly, the dark trace 404 represents a best fit curve applied to a series of reflected impedance measurements (or, alternatively, reflected impedance simulations) within the select frequency band (e.g., indicated by the dashed segments cutting through the trace at about location 406). The region of the Smith chart corresponding to the dark trace 404 (e.g., indicated by the dashed oval shape) represents a region 408 of non-trivial power reflection between the power amplifier and the antenna over a range of frequencies, even if the power amplifier and antenna are well-matched (i.e., they are considered within a mismatched classification because the measurements include some level of reactance).

During the generation of the classification data in the classification datastore, reflected impedance measurements are taken with the conductor connected to a 50 Ohm plug and no antenna. The classification region defined around these measurements (typically enlarged to encompass a larger region than that simply defined by the measurements themselves) is referred to as a matched impedance classification region (corresponding to a conducted state).

Additional reflected impedance measurements with the conductor connected to an antenna without the 50 Ohm plug (e.g., across a wide range of frequencies, across multiple antennas, and or across multiple devices). The classification region defined around these measurements (typically enlarged to encompass a larger region than that simply defined by the measurements themselves) is referred to as a mismatched impedance classification region (corresponding to a non-conducted state).

For each frequency band of interest (e.g., low band, mid band, high band frequencies) and potentially for each additional transmission condition (e.g., with a hand near the antenna), a mean squared error is computed between the measurements of the conducted state and the measurements of the frequency band in the non-conducted state. This computation results in a scalar value corresponding to the classification region for that frequency band and/or transmission condition, which can be referred to as a classification region identifier. The enlargement of the impedance classification regions can be accomplished by using the mean-squared-error corresponding to a particular frequency of interest as a reference value and applying a buffer range to it in the calibration data, by classifying the mean-squared-error of a measured impedance within a buffer range of acceptable mean-squared-error values, and/or other methods of giving the classification operation some level of tolerance.

During device operation in the field, reflected impedance measurements are taken with the conductor connected to the antenna, responsive to supplying one or more probe signals to the antenna. The reflected impedance measurements can be captured over a time window and averaged over time. For the current operating conditions, a mean squared error is computed between the measurements of the conducted state in the calibration data and the measurements responsive to the probe signals. This computation results in a scalar value corresponding to the classification region for that measurement session, which can be referred to as the measured error value. The measured error value is compared to the classification region identifiers of the conducted state and the non-conducted states to determine the state in which the device is currently operating (e.g., the current classification). Thereafter, the corrective action corresponding to the current classification is applied to the transmission subsystem to improve communications from the antenna (e.g., reduce reflected power between the power amplifier and the antenna.

Such adjustment operations may be performed in response to a manual instruction, in response to a detection of poor transmission performance, periodically, etc.

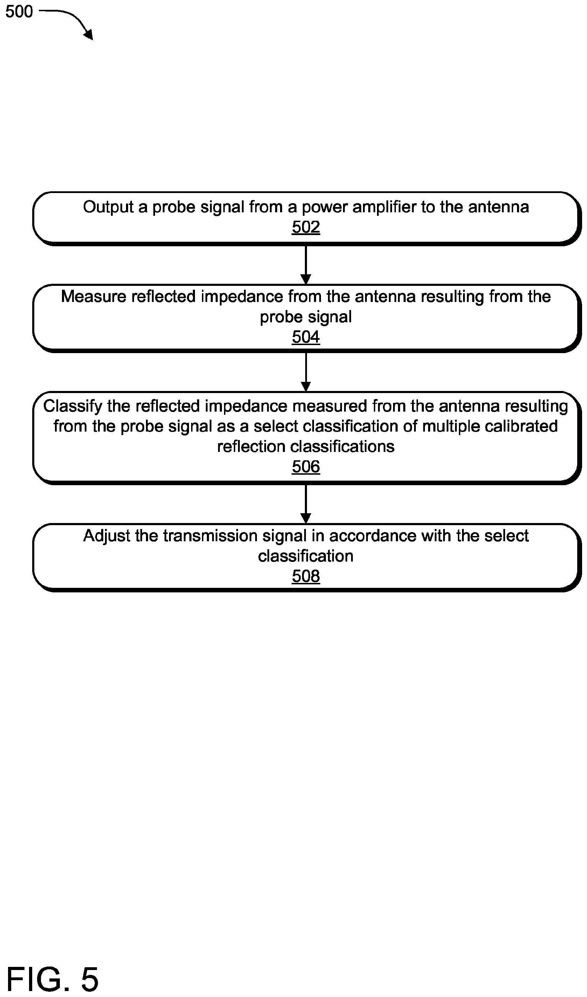

FIG. 5 illustrates example operations 500 for adjusting a transmission signal according to a classification of the reflected impedance from a probe signal. A probing operation 502 outputs a probe signal from a power amplifier to the antenna. A measuring operation 504 measures reflected impedance from the antenna resulting from the probe signal. A classifying operation 506 classifies the reflected impedance measured from the antenna resulting from the probe signal as a select classification of multiple calibrated reflection classifications. The multiple calibrated reflection classifications include variations in reflected impedance as reflected in regions of a Smith Chart defined during calibration. A transmission operation 508 adjusts the transmission signal in accordance with the select classification.

In some implementations, the probe signal is output below a defined noise level of the power amplifier and the antenna. The multiple calibrated reflection classifications may further include variations in frequency channels of operation corresponding to each calibrated reflection classification. Each classification of the multiple calibrated reflection classifications corresponds to a corrective action, and one or more subsequent transmission signals are supplied to the antenna by the power amplifier in accordance with the corrective action corresponding to the select classification. Example corrective actions may include one or more of a group including adjusting the transmission power of the transmission signal, adjusting filtering applied to the transmission signal, adjusting impedance matching between the power amplifier and the antenna, and adjusting an electrical aperture of the antenna.

In some implementations, measuring the reflected impedance includes measuring multiple reflected impedances over a non-zero time duration and averaging the multiple reflected impedances over the non-zero time duration to yield the reflected impedance measured from the antenna resulting from the probe signal.

In some implementations, each calibrated reflection classification defines a region of S-parameter measurements corresponding to the calibrated reflection classification and classifying the reflected impedance measured from the antenna includes mapping the reflected impedance measured from the antenna resulting from the probe signal to the region of the S-parameter measurements of the select classification.

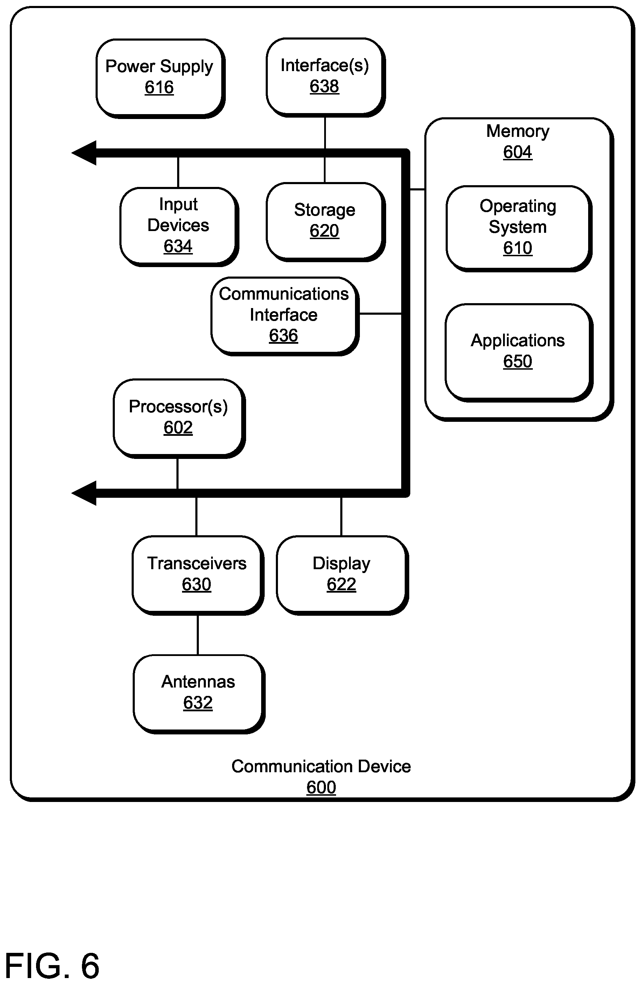

FIG. 6 illustrates an example communication device 600 for use in implementing the described technology. The communication device 600 may be a client communication device (such as a laptop computer, a desktop computer, or a tablet computer), a server/cloud communication device, an Internet-of-Things (IoT), any other type of communication device, or a combination of these options. The communication device 600 includes one or more hardware processor(s) 602 and a memory 604. The memory 604 generally includes both volatile memory (e.g., RAM) and nonvolatile memory (e.g., flash memory), although one or the other type of memory may be omitted. An operating system 610 resides in the memory 604 and is executed by the processor(s) 602.

In some implementations, the communication device 600 includes and/or is communicatively coupled to storage 620.

In the example communication device 600, as shown in FIG. 6, one or more software modules, segments, and/or processors, such as applications 650, a reflection analyzer, a classifier, a transmission controller, and other program code and modules are loaded into the operating system 610 on the memory 604 and/or the storage 620 and executed by the processor(s) 602. The storage 620 may store impedance matching calibrations (including Smith Chart regions, corrective actions and their associated parameters, antenna identifiers, and frequency values), reflected impedance measurements, and other data and be local to the communication device 600 or may be remote and communicatively connected to the communication device 600. In particular, in one implementation, components of a system for adjusting a transmission signal according to a classification of the reflected impedance from a probe signal may be implemented entirely in hardware or in a combination of hardware circuitry and software.

The communication device 600 includes a power supply 616, which may include or be connected to one or more batteries or other power sources and which provides power to other components of the communication device 600. The power supply 616 may also be connected to an external power source that overrides or recharges the built-in batteries or other power sources.

The communication device 600 may include one or more communication transceivers 630, which may be connected to one or more antenna(s) 632 to provide network connectivity (e.g., mobile phone network, Wi-Fi®, Bluetooth®) to one or more other servers, client devices, IoT devices, and other computing and communications devices. The communication device 600 may further include a communications interface 636 (such as a network adapter or an I/O port, which are types of communication devices). The communication device 600 may use the adapter and any other types of communication devices for establishing connections over a wide-area network (WAN) or local-area network (LAN). It should be appreciated that the network connections shown are exemplary and that other communications devices and means for establishing a communications link between the communication device 600 and other devices may be used.

The communication device 600 may include one or more input devices 634 such that a user may enter commands and information (e.g., a keyboard, trackpad, or mouse). These and other input devices may be coupled to the server by one or more interfaces 638, such as a serial port interface, parallel port, or universal serial bus (USB). The communication device 600 may further include a display 622, such as a touchscreen display.

The communication device 600 may include a variety of tangible processor-readable storage media and intangible processor-readable communication signals. Tangible processor-readable storage can be embodied by any available media that can be accessed by the communication device 600 and can include both volatile and nonvolatile storage media and removable and non-removable storage media. Tangible processor-readable storage media excludes intangible and transitory communications signals (such as signals per se) and includes volatile and nonvolatile, removable and non-removable storage media implemented in any method, process, or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the communication device 600. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Clause 1. A method of adjusting a transmission signal supplied to an antenna, the method comprising: outputting a probe signal from a power amplifier to the antenna; measuring reflected impedance from the antenna resulting from the probe signal, classifying the reflected impedance measured from the antenna resulting from the probe signal as a select classification of multiple calibrated reflection classifications, wherein the multiple calibrated reflection classifications include variations in reflected impedance; and adjusting the transmission signal in accordance with the select classification.

Clause 2. The method of clause 1, wherein the probe signal is output below a defined noise level of the power amplifier and the antenna.

Clause 3. The method of clause 1, wherein the multiple calibrated reflection classifications further include variations in frequency channels of operation corresponding to each calibrated reflection classification.

Clause 4. The method of clause 1, wherein each classification of the multiple calibrated reflection classifications corresponds to a corrective action, and adjusting the transmission signal comprises: adjusting the transmission signal supplied to the antenna by the power amplifier in accordance with the corrective action corresponding to the select classification.

Clause 5. The method of clause 4, wherein the corrective action includes one or more of a group including adjusting transmission power of the transmission signal, adjusting filtering applied to the transmission signal, adjusting impedance matching between the power amplifier and the antenna, and adjusting an electrical aperture of the antenna.

Clause 6. The method of clause 1, wherein measuring the reflected impedance includes measuring multiple reflected impedances over a non-zero time duration, and classifying includes computing a measured error value between the multiple reflected impedances over the non-zero time duration and a calibrated value for a conducted state and identifying the select classification of the multiple calibrated reflection classifications based on the measured error value and a classification region identifier corresponding to the select classification.

Clause 7. The method of clause 1, wherein each calibrated reflection classification defines a region of S-parameter measurements corresponding to the calibrated reflection classification and classifying the reflected impedance measured from the antenna comprises: mapping the reflected impedance measured from the antenna resulting from the probe signal to the region of the S-parameter measurements of the select classification.

Clause 8. A communications device for adjusting a transmission signal, the communications device comprising: one or more hardware processors; an antenna; a power amplifier connected to the antenna and configured to output a probe signal and the transmission signal to the antenna; a reflection analyzer circuitry connected to the antenna and configured to measure reflected impedance from the antenna resulting from the probe signal; and a classifier executable by the one or more hardware processors and configured to classify the reflected impedance measured from the antenna resulting from the probe signal as a select classification of multiple calibrated reflection classifications, wherein the multiple calibrated reflection classifications include variations in reflected impedance, at least one matched classification, and at least one mismatched classification, wherein the power amplifier is further configured to adjust the transmission signal in accordance with the select classification.

Clause 9. The communications device of clause 8, wherein the probe signal is output below a defined noise level of the power amplifier and the antenna.

Clause 10. The communications device of clause 8, wherein the multiple calibrated reflection classifications further include variations in frequency channels of operation corresponding to each calibrated reflection classification.

Clause 11. The communications device of clause 8, wherein each classification of the multiple calibrated reflection classifications corresponds to a corrective action, and the power amplifier is configured to adjust the transmission signal supplied to the antenna by the power amplifier in accordance with the corrective action corresponding to the select classification.

Clause 12. The communications device of clause 11, wherein the corrective action includes one or more of a group including adjusting transmission power of the transmission signal, adjusting filtering applied to the transmission signal, adjusting impedance matching between the power amplifier and the antenna, and adjusting an electrical aperture of the antenna.

Clause 13. The communications device of clause 8, wherein the reflection analyzer is configured to measure the reflected impedance by measuring multiple reflected impedances over a non-zero time duration, and the classifier is configured to compute a measured error value between the multiple reflected impedances over the non-zero time duration and a calibrated value for a conducted state and to identify the select classification of the multiple calibrated reflection classifications based on the measured error value and a classification region identifier corresponding to the select classification.

Clause 14. The communications device of clause 8, wherein each calibrated reflection classification defines a region of S-parameter measurements corresponding to the calibrated reflection classification and the classifier is configured to classify the reflected impedance measured from the antenna resulting from the probe signal by mapping the reflected impedance measured from the antenna resulting from the probe signal to the region of the S-parameter measurements of the select classification.

Clause 15. One or more tangible processor-readable storage media embodied with instructions for executing on one or more processors and circuits of a communication device a process for adjusting a transmission signal supplied to an antenna, the process comprising: outputting a probe signal from a power amplifier to the antenna; measuring reflected impedance from the antenna resulting from the probe signal, classifying the reflected impedance measured from the antenna resulting from the probe signal as a select classification of multiple calibrated reflection classifications, wherein the multiple calibrated reflection classifications include variations in reflected impedance and at least one mismatched classification; and adjusting the transmission signal in accordance with the select classification.

Clause 16. The one or more tangible processor-readable storage media of clause 15, wherein the probe signal is output below a defined noise level of the power amplifier and the antenna.

Clause 17. The one or more tangible processor-readable storage media of clause 15, wherein the multiple calibrated reflection classifications further include variations in frequency channels of operation corresponding to each calibrated reflection classification.

Clause 18. The one or more tangible processor-readable storage media of clause 15, wherein each classification of the multiple calibrated reflection classifications corresponds to a corrective action, and adjusting the transmission signal comprises: adjusting the transmission signal supplied to the antenna by the power amplifier in accordance with the corrective action corresponding to the select classification.

Clause 19. The one or more tangible processor-readable storage media of clause 18, wherein the corrective action includes one or more of a group including adjusting transmission power of the transmission signal, adjusting filtering applied to the transmission signal, adjusting impedance matching between the power amplifier and the antenna, and adjusting an electrical aperture of the antenna.

Clause 20. The one or more tangible processor-readable storage media of clause 15, wherein measuring the reflected impedance includes measuring multiple reflected impedances over a non-zero time duration, and classifying includes computing a measured error value between the multiple reflected impedances over the non-zero time duration and a calibrated value for a conducted state and identifying the select classification of the multiple calibrated reflection classifications based on the measured error value and a classification region identifier corresponding to the select classification.

Clause 21. A system of adjusting a transmission signal supplied to an antenna, the system comprising: means for outputting a probe signal from a power amplifier to the antenna; means for measuring reflected impedance from the antenna resulting from the probe signal, means for classifying the reflected impedance measured from the antenna resulting from the probe signal as a select classification of multiple calibrated reflection classifications, wherein the multiple calibrated reflection classifications include variations in reflected impedance; and means for adjusting the transmission signal in accordance with the select classification.

Clause 22. The system of clause 21, wherein the probe signal is output below a defined noise level of the power amplifier and the antenna.

Clause 23. The system of clause 21, wherein the multiple calibrated reflection classifications further include variations in frequency channels of operation corresponding to each calibrated reflection classification.

Clause 24. The system of clause 21, wherein each classification of the multiple calibrated reflection classifications corresponds to a corrective action, and the means for adjusting the transmission signal comprises: means for adjusting the transmission signal supplied to the antenna by the power amplifier in accordance with the corrective action corresponding to the select classification.

Clause 25. The system of clause 24, wherein the corrective action includes one or more of a group including means for adjusting transmission power of the transmission signal, means for adjusting filtering applied to the transmission signal, means for adjusting impedance matching between the power amplifier and the antenna, and means for adjusting an electrical aperture of the antenna.

Clause 26. The system of clause 21, wherein the means for measuring the reflected impedance includes measuring multiple reflected impedances over a non-zero time duration, and the means for classifying includes means for computing a measured error value between the multiple reflected impedances over the non-zero time duration and a calibrated value for a conducted state and means for identifying the select classification of the multiple calibrated reflection classifications based on the measured error value and a classification region identifier corresponding to the select classification.

Clause 27. The system of clause 21, wherein each calibrated reflection classification defines a region of S-parameter measurements corresponding to the calibrated reflection classification and the means for classifying the reflected impedance measured from the antenna comprises: means for mapping the reflected impedance measured from the antenna resulting from the probe signal to the region of the S-parameter measurements of the select classification.

Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

**Claims**

1. A method of adjusting a transmission signal supplied to an antenna, the method comprising:

   outputting a probe signal from a power amplifier to the antenna;
   measuring reflected impedance from the antenna resulting from the probe signal,
   classifying the reflected impedance measured from the antenna resulting from the probe signal as a select classification of multiple calibrated reflection classifications, wherein the multiple calibrated reflection classifications include variations in reflected impedance; and
   adjusting the transmission signal in accordance with the select classification.

2. The method of claim 1, wherein the probe signal is output below a defined noise level of the power amplifier and the antenna.

3. The method of claim 1 or claim 2, wherein the multiple calibrated reflection classifications further include variations in frequency channels of operation corresponding to each calibrated reflection classification.

4. The method of any one of claim 1 to 3, wherein each classification of the multiple calibrated reflection classifications corresponds to a corrective action, and adjusting the transmission signal comprises: adjusting the transmission signal supplied to the antenna by the power amplifier in accordance with the corrective action corresponding to the select classification.

5. The method of claim 4, wherein the corrective action includes one or more of a group including adjusting transmission power of the transmission signal, adjusting filtering applied to the transmission signal, adjusting impedance matching between the power amplifier and the antenna, and adjusting an electrical aperture of the antenna.

6. The method of any one of claims 1 to 5, wherein measuring the reflected impedance includes measuring multiple reflected impedances over a non-zero time duration, and classifying includes computing a measured error value between the multiple reflected impedances over the non-zero time duration and a calibrated value for a conducted state and identifying the select classification of the multiple calibrated reflection classifications based on the measured error value and a classification region identifier corresponding to the select classification.

7. The method of any one of claims 1 to 6, wherein each calibrated reflection classification defines a region of S-parameter measurements corresponding to the calibrated reflection classification and classifying the reflected impedance measured from the antenna comprises:
    mapping the reflected impedance measured from the antenna resulting from the probe signal to the region of the S-parameter measurements of the select classification.

8. A communications device for adjusting a transmission signal, the communications device comprising:

    one or more hardware processors;
    an antenna;
    a power amplifier connected to the antenna and configured to output a probe signal and the transmission signal to the antenna;
    a reflection analyzer circuitry connected to the antenna and configured to measure reflected impedance from the antenna resulting from the probe signal; and
    a classifier executable by the one or more hardware processors and configured to classify the reflected impedance measured from the antenna resulting from the probe signal as a select classification of multiple calibrated reflection classifications, wherein the multiple calibrated reflection classifications include variations in reflected impedance, at least one matched classification, and at least one mismatched classification, wherein the power amplifier is further configured to adjust the transmission signal in accordance with the select classification.

9. The communications device of claim 8, wherein the probe signal is output below a defined noise level of the power amplifier and the antenna.

10. The communications device of claim 8 or claim 9, wherein the multiple calibrated reflection classifications further include variations in frequency channels of operation corresponding to each calibrated reflection classification.

11. The communications device of any one of claims 8 to 10, wherein each classification of the multiple calibrated reflection classifications corresponds to a corrective action, and the power amplifier is configured to adjust the transmission signal supplied to the antenna by the power amplifier in accordance with the corrective action corresponding to the select classification.

12. The communications device of claim 11, wherein the corrective action includes one or more of a group including adjusting transmission power of the transmission signal, adjusting filtering applied to the transmission signal, adjusting impedance matching between the power amplifier and the antenna, and adjusting an electrical aperture of the antenna.

13. The communications device of any one of claims 8 to 12, wherein the reflection analyzer is configured to measure the reflected impedance by measuring multiple reflected impedances over a non-zero time duration, and the classifier is configured to compute a measured error value between the multiple reflected impedances over the non-zero time duration and a calibrated value for a conducted state and to identify the select classification of the multiple calibrated reflection classifications based on the measured error value and a classification region identifier corresponding to the select classification.

14. The communications device of any one of claims 8 to 13, wherein each calibrated reflection classification defines a region of S-parameter measurements corresponding to the calibrated reflection classification and the classifier is configured to classify the reflected impedance measured from the antenna resulting from the probe signal by mapping the reflected impedance measured from the antenna resulting from the probe signal to the region of the S-parameter measurements of the select classification.

15. One or more tangible processor-readable storage media embodied with instructions for executing on one or more processors and circuits of a communication device a process for adjusting a transmission signal supplied to an antenna the process comprising the method according to any one of claims 1 to 7.

**FIG. 1**

200 —

Modem
212

Reflection
Analyzer
216

Classification
Datastore
214

Classifier
218

Transmission
Controller
220

Calibration
Controller
215

204

Power Amplifier
206

Probe Signal

Antenna
208

Reflection

210 —

202 —

FIG. 2

FIG. 3

400

FIG. 4

500

Output a probe signal from a power amplifier to the antenna
502

Measure reflected impedance from the antenna resulting from the probe signal
504

Classify the reflected impedance measured from the antenna resulting from the probe signal as a select classification of multiple calibrated reflection classifications
506

Adjust the transmission signal in accordance with the select classification
508

FIG. 5

Power Supply
616

Interface(s)
638

Memory
604

Input
Devices
634

Storage
620

Operating
System
610

Communications
Interface
636

Applications
650

Processor(s)
602

Transceivers
630

Display
622

Antennas
632

Communication Device
600

FIG. 6

European Patent Office

Europäisches Patentamt

European Patent Office

Office européen des brevets

# EUROPEAN SEARCH REPORT

**Application Number**

EP 25 17 3227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/195283 A1 (LIM WONSUB [KR] ET AL) 18 June 2020 (2020-06-18) <br> * abstract; figures 4,9 * <br> * paragraphs [0046] - [0068], [0091] - [0101] * <br> ----- | 1-15 | INV. <br> H04B1/04 <br> H04B17/10 |
| X | EP 2 612 445 B1 (SAMSUNG ELECTRONICS CO LTD [KR]) 1 January 2020 (2020-01-01) <br> * abstract; figures 4, 5 * <br> * paragraphs [0039] - [0045], [0061] - [0073] * <br> ----- | 1-15 | |
| A | US 2014/227981 A1 (PECEN MARC [CA] ET AL) 14 August 2014 (2014-08-14) <br> * the whole document * <br> ----- | 1-15 | |

**TECHNICAL FIELDS SEARCHED (IPC)**

H04B

The present search report has been drawn up for all claims

| Place of search | Date of completion of the search | Examiner |
|---|---|---|
| Munich | 22 September 2025 | Almenar Muñoz, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 17 3227

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2025

| Patent document cited in search report | | Publication date | Patent family member(s) | | Publication date |
|---|---|---|---|---|---|
| US 2020195283 | A1 | 18-06-2020 | KR | 20180130849 A | 10-12-2018 |
| | | | US | 2020195283 A1 | 18-06-2020 |
| | | | WO | 2018221847 A1 | 06-12-2018 |
| EP 2612445 | B1 | 01-01-2020 | EP | 2612445 A2 | 10-07-2013 |
| | | | US | 2012051409 A1 | 01-03-2012 |
| | | | WO | 2012030157 A2 | 08-03-2012 |
| US 2014227981 | A1 | 14-08-2014 | EP | 2768147 A1 | 20-08-2014 |
| | | | HK | 1201104 A1 | 21-08-2015 |
| | | | US | 2014227981 A1 | 14-08-2014 |
| | | | US | 2016204808 A1 | 14-07-2016 |

EPO FORM P0459

For more details about this annex : see Official Journal of the European Patent Office, No. 12/82